Europäisches Patentamt

**European Patent Office**

Office européen des brevets

(11) Numéro de publication: **0 018 919**
**B1**

(12) **FASCICULE DE BREVET EUROPEEN**

(45) Date de publication du fascicule du brevet:
**25.01.84**

(21) Numéro de dépôt: **80400608.8**

(22) Date de dépôt: **06.05.80**

(51) Int. Cl.³: **G 01 G 3/12,** G 01 G 23/36,
G 01 G 21/16, G 01 G 19/44

(54) **Appareil de pesage avec poutrelle à flexion élastique.**

(30) Priorité: **07.05.79 FR 7911457**

(43) Date de publication de la demande:
**12.11.80 Bulletin 80/23**

(45) Mention de la délivrance du brevet:
**25.01.84 Bulletin 84/4**

(84) Etats contractants désignés:
**AT BE CH DE GB IT LI LU NL SE**

(56) Documents cités:
**FR - A - 2 364 441**
**FR - A - 2 381 295**
**US - A - 4 050 532**

(73) Titulaire: **TESTUT-AEQUITAS, 8, rue Popincourt,
F-75011 Paris (FR)**

(72) Inventeur: **Dauge, Gilbert Victor, 15 Quai du Pré Long,
F-77400 Lagny (FR)**
Inventeur: **Langlais, Jacques Fernand, 38, rue des
Ecoles, F-77000 Coudray Monteraux (FR)**

(74) Mandataire: **Corre, Jacques Denis Paul et al, Cabinet
Regimbeau 26, Avenue Kléber, F-75116 Paris (FR)**

ACTORUM AG

## Appareil de pesage avec poutrelle à flexion élastique

L'invention concerne les appareils de pesage ou balances de faible encombrement, et plus particulièrement, mais non exclusivement, les pèse-personnes.

On connaît déjà des appareils de pesage comprenant un plateau supérieur porte-charge, un plateau inférieur d'appui, et un mécanisme coopérant avec ces deux plateaux pour délivrer une indication relative à la charge présente sur le plateau porte-charge, dans lesquels ce mécanisme comporte un organe de flexion et des moyens d'articulation pour transformer la force due à une charge sur le plateau porte-charge en deux moments fléchissants appliqués aux extrémités des organes de flexion.

Le brevet américain US-A-4 050 532 décrit un dispositif du même genre, avec cependant une structure mécanique beaucoup plus complexe, et une mesure de charge par jauge de contraintes.

Il en est de même pour la demande de brevet français FR-A-2 381 295, dont la structure mécanique est très différente en fait, puisqu'il s'agit d'un récepteur de charge à levier classique, qui incorpore un ressort. Par contre, la mesure de charge est de type capacitif.

La présente invention a notamment pour but de fournir un récepteur de charge qui soit plat, sûr, ainsi que simple et économique à fabriquer.

A cet effet, les moyens d'articulation sont des moyens formant au moins deux doubles charnières parallèles, montées espacées l'une de l'autre, chacune entre le plateau porte-charge et le plateau d'appui, l'organe de flexion comprend un pont rigide muni d'une zone médiane élastique comportant un étranglement, et dont les extrémités sont reliées respectivement aux parties intermédiaires des deux doubles charnières; enfin le mécanisme comporte en outre deux bras liés rigidement par l'une de leurs extrémités au pont de part et d'autre de son étranglement, ainsi que deux armatures portées par lesdits bras, et aptes à définir au moins une capacité fonction de la charge appliquée sur le plateau porte-charge.

Très avantageusement, les plateaux porte-charge et d'appui, le pont et les deux bras porte-armatures sont généralement parallèles entre eux.

Dans un mode de réalisation préférentiel, le pont comprend une lame de flexion à étranglement en partie centrale, et deux leviers disposés symétriquement par rapport à celle-ci. En pareil cas, avantageusement, les deux leviers ont la forme générale de T opposés par l'extrémité de leur âme, les barres des T étant des pièces rectangulaires coopérant à définir les articulations, tandis que leurs âmes définissent une grande rigidité transversale en même temps qu'une faible rigidité en torsion.

Selon une autre caractéristique de l'invention, l'étranglement de la partie médiane élastique est légèrement décalé de la position symétrique.

Préférentiellement, les doubles charnières, le plateau porte-charge et le pont sont généralement symétriques par rapport à la partie médiane élastique de ce dernier.

Dans un mode de réalisation particulier, les moyens d'articulation comportent quatre doubles charnières élastiques définies chacune par deux étranglements parallèles, montées dans les quatre zones de coin du plateau supérieur, et pourvues deux à deux d'axes de charnières alignées.

Avantageusement, l'une des armatures du condensateur déborde légèrement l'autre sur toute sa périphérie, les deux armatures formant ensemble un même condensateur.

En variante, les deux armatures portées par les bras liés rigidement au pont de part et d'autre de sa partie médiane sont les armatures mobiles de deux condensateurs variables, agencés de sorte que les variations respectives de distance des armatures dans ces deux condensateurs sous l'action de la charge pesée soient de valeur opposée.

D'autres caractéristiques et avantages de l'invention apparaîtront à la lecture de la description détaillée qui va suivre, illustrant un mode de réalisation préférentiel de la présente invention, et faite en référence aux dessins annexés, sur lesquels:
- la fig. 1 est une vue schématique en coupe d'un mode de réalisation préférentiel de l'invention;
- les figs 2 et 3 sont des détails de la coupe de la fig. 1;
- les figs 4 et 5 sont deux illustrations respectivement en coupe et en vue de dessus d'un pèse-personne agencé selon le mode de réalisation préférentiel de l'invention; et
- la fig. 6 est une vue schématique et partielle en coupe d'une variante de réalisation de l'invention.

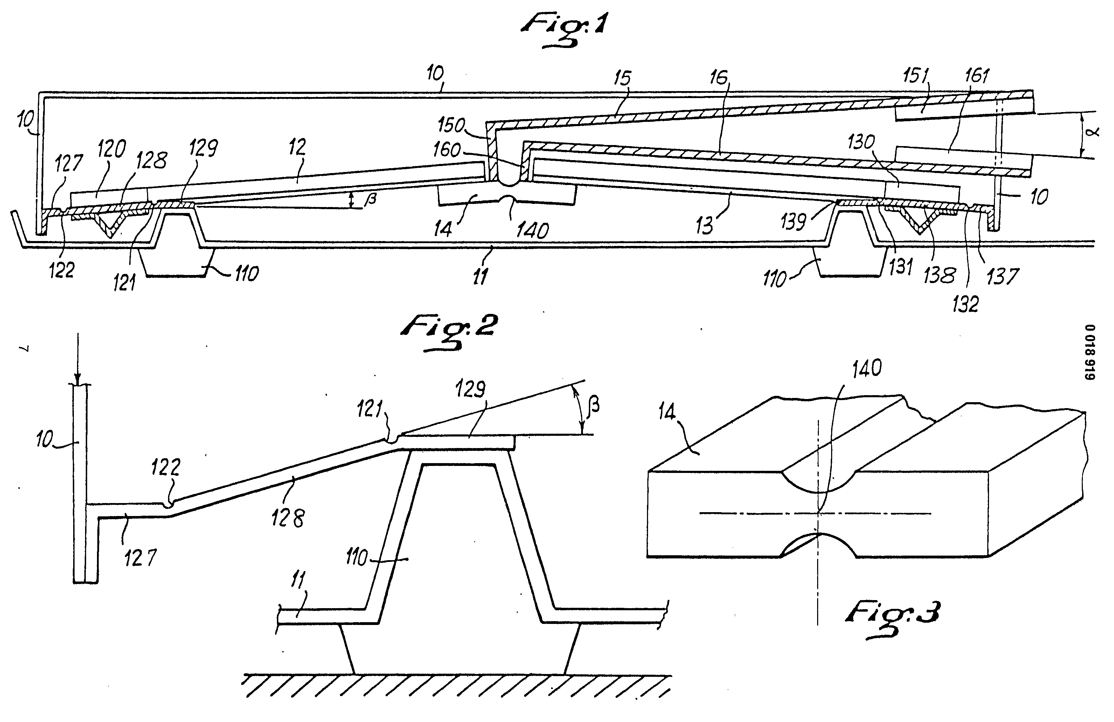

Sur la fig. 1, on distingue un plateau supérieur 10 et un plateau inférieur 11, muni de quatre pieds de support 110. Au niveau de chacun des pieds de support, une articulation à double charnière élastique relie le plateau supérieur 10 au plateau inférieur 11.

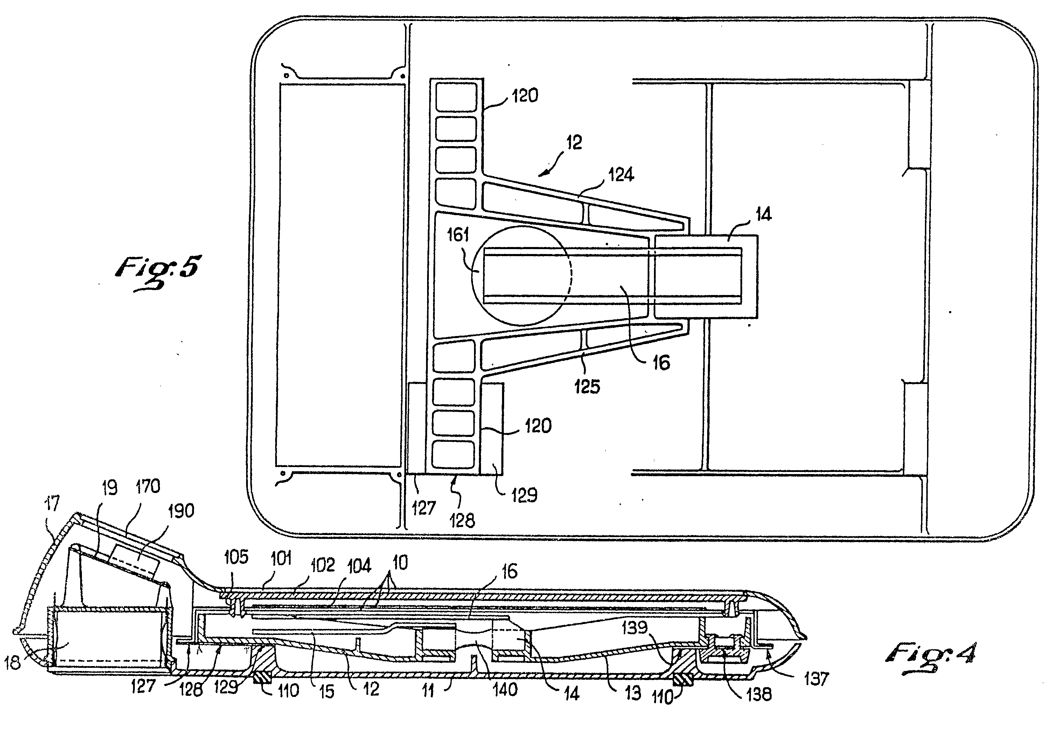

Comme le montrent les figs 1 et 2, au niveau de chacun des deux pieds-support de gauche, le plateau d'appui est solidaire d'une partie fixe 129 de la double charnière; cette partie fixe 129 est reliée par un premier étranglement rectiligne 121 à la partie intermédiaire 128 de la double charnière, qui à son tour est reliée par un second étranglement rectiligne 122, parallèle au premier, à la dernière partie 127 de la double charnière, solidaire d'un rebord vertical du plateau porte-charge 10. Bien qu'on puisse prévoir une double charnière unique chevauchant les deux pieds-support 110 situés à gauche de la fig. 1, il est à l'heure actuelle considéré comme préférable de prévoir deux doubles charnières étroites alignées l'une sur l'autre, au moins en ce qui concerne leurs étranglements, et avantageusement identiques.

Du côté droit de la fig. 1, on retrouve une disposition semblable, avec double charnière comprenant une partie fixe 139 solidaire du plateau d'appui 11 au droit du pied 110, une partie intermédiaire 138, et une dernière partie 137 solidaire du plateau porte-charge 10.

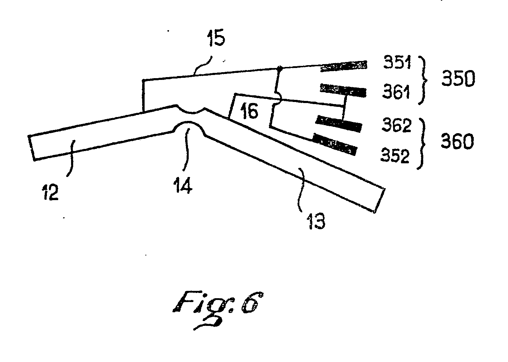

Le pont selon l'invention comporte deux leviers 12 et 13, réunis par une partie médiane élastique 14, l'élasticité de celle-ci étant principalement fournie par un étranglement 140 (fig. 3). Les éléments 12 et 13 sont en forme générale de T à âme double et opposés par l'extrémité de leur âme. Les barres transversales extrêmes de ces T, respectivement désignées par les références numériques 120 et 130, sont solidaires des parties intermédiaires 128 et 138 des doubles charnières. Au centre, aux extrémités des âmes de ces T sont fixées les extrémités de la lame élastique 14, illustrée en perspective cavalière sur la fig. 3. L'ensemble est rigide, et la flexion n'est permise pratiquement qu'au niveau du centre de l'étranglement 140 de la lame élastique 14. De part et d'autre de cet étranglement sont fixés sur la lame élastique 14 deux coudes 150 et 160 faisant partie de bras 15 et 16, qui s'étendent généralement parallèles aux plateaux 10 et 11, pour se terminer par des armatures 151 et 161 formant entre elles un condensateur.

Les quatre doubles charnières (telles que 127 à 129 et 137 à 139) sont disposées sensiblement pour former un rectangle, et ce rectangle se présente de manière pratiquement symétrique par rapport au centre 140 de la lame élastique 14. Ainsi, les charges appliquées sur le plateau supérieur 10 appliquent deux moments de flexion respectifs aux deux leviers 12 et 13 (flexion pour le levier 13), compte tenu du fait que celles-ci sont supportées à point fixe en 129 et 139 sur le plateau d'appui; ces moments de flexion se retrouvent donc finalement appliqués à la lame de flexion 14, qui prend un certain angle (2β), à l'évidence faible dans la pratique. Le même angle se reporte entre les bras 15 et 16, et fait varier l'écartement entre les armatures 151 et 161 du condensateur. On obtient donc finalement au niveau de ces condensateurs une capacité qui est liée de manière monotone à la charge appliquée sur le plateau 10. Cette variation de capacité peut être mesurée, par différents moyens accessibles à l'homme de l'art; très avantageusement, la mesure de capacité est effectuée selon la demande de brevet français FR-A-2 404 229 déposée le 23 septembre 1977 au nom de la demanderesse.

De préférence, l'une des électrodes 151 et 161 est légèrement plus grande que l'autre, de manière à éviter que des variations de capacité n'interviennent en raison de déplacements relatifs parasites entre les électrodes.

Il est important pour la mise en œuvre de l'invention que le pont constitué ici par les deux leviers 12 et 13 présente une grande rigidité transversale, c'est-à-dire qu'il transmette intégralement le moment de flexion de pesée verticalement à la lame de flexion 14; par contre, les mêmes éléments 12 et 13 possèdent de préférence une faible rigidité en torsion, de manière à éviter d'appliquer à la lame de flexion 14 des efforts de torsion qui correspondraient aux variations de la position que peut prendre la charge sur le plateau supérieur 10.

Bien entendu, sur les figs 1 et 2, les déformations ont été largement amplifiées, pour mieux montrer le fonctionnement.

Sur le schéma de principe des figs 1 et 2, les âmes des leviers 12 et 13 ont une structure en T dont la tête est orientée vers le bas. Ces âmes font elles-mêmes partie d'un grand T, dont les têtes 120 et 130 sont fixées par exemple par soudure sur les pièces 128 et 138, des contreforts étant disposés si nécessaire à l'opposé des têtes 120 et 130 par rapport aux pièces 128 et 138.

Les figs 4 et 5 illustrent une réalisation pratique de l'invention sous forme de pèse-personne. Les éléments fonctionnellement équivalents à ceux du schéma de principe des figs 1 à 3 conservent la même référence numérique et ne seront pas décrits à nouveau, même s'ils présentent une forme différente. On notera en particulier, à cet égard, la structure et la forme particulière des leviers 12 et 13, qui sont généralement semblables. Sur ceux-ci est fixée la lame de flexion 14, dont l'un des côtés est surélevé, pour éviter l'usage des coudes 150 et 160 de la fig. 1. La vue partielle de la fig. 5 met bien en lumière la structure moulée du levier 12, dont la tête comporte deux éléments en forme de poutre en U alvéolée par des éléments de liaison, et dont l'âme, élargie, s'étale entre deux bordures 124 et 125 également conformées en poutre en U alvéolée. Enfin, comme c'est souvent le cas dans un pèse-personne, le plateau supérieur 10, composite, incorpore toute la partie supérieure de l'appareil, dont la protubérance 17 dont une zone transparente 170 permet la visualisation du poids. La partie utile du plateau porte-charge 10 comporte une moquette 101 reposant sur une plaque 102 qui elle-même s'appuie par des nervures longitudinales (non représentées) sur la plaque 104, à laquelle elle est fixée par des agrafes 105, et qui vient à son tour s'appuyer sur les parties extrêmes 127 et 137 des doubles charnières élastiques.

De leur côté les bras 15 et 16, dont le sens est inversé par rapport à la fig. 1, supportent les armatures (non représentées) du condensateur. Celles-ci sont reliées à un circuit électronique monté sur circuit imprimé 19, et équipé d'un affichage 190 visible à travers le transparent 170. Le dispositif électronique surmonte un compartiment à piles 18, qui l'alimente, l'ensemble étant de préférence réalisé suivant la demande de brevet français déjà citée.

On décrira maintenant une autre caractéristique de l'invention, qui s'applique indifféremment à tous les modes de réalisation.

Il convient de rappeler tout d'abord que du fait de la faible rigidité en torsion de la poutrelle constituée des éléments 12 et 13, éventuellement d'un seul bloc, les appareils de pesage de l'invention sont peu sensibles à la disposition de la charge dans un sens perpendiculaire à la figure. Il reste cependant que les indications finalement obtenues au niveau du condensateur peuvent varier en fonction de la position de la charge le long du plateau 10 dans le plan de la figure. Ainsi, la demanderesse a observé que l'indication du condensateur formé par les électrodes 151, 161 n'est pas rigoureusement la même suivant que la charge est placée au centre, ou bien dans la partie droite ou dans la partie gauche du plateau.

Ces phénomènes sont d'explication difficile. Schématiquement, on peut en donner une interprétation en remarquant que le centre instantané de rotation est défini par l'intersection des bras 15 et 16 reliés au condensateur. Et ce centre de rotation se déplace légèrement suivant que la charge est placée dans la partie droite ou dans la partie gauche du plateau supérieur. Plus précisément, si la charge est totalement appliquée dans la partie gauche du plateau, le centre de rotation tend à se déplacer vers la gauche. Inversement, si la charge est placée dans la partie extrême droite du plateau, le centre de rotation tend à se déplacer vers la droite. Il en résulte simultanément d'une part une modification apparente de la géométrie de la poutrelle constituée des éléments 12 et 13, et d'autre part une modification également apparente de la longueur des rayons constitués par les bras 15 et 16 par rapport au centre instantané de rotation. La demanderesse a observé que ces effets tendaient à provoquer des erreurs différentes suivant que l'on place la charge en partie gauche du plateau ou en partie droite du plateau. Elle a également observé qu'il est possible de rendre ces erreurs symétriques en fonction de la position de la charge par rapport au centre du plateau, en modifiant légèrement la position du centre de l'étranglement 140 de la lame de flexion, par rapport au centre de symétrie des rectangles définis par les axes des doubles charnières. Ainsi, selon une autre caractéristique de l'invention, on déplace légèrement le centre de l'étranglement 140 de la position symétrique théorique, et ce du côté où se trouvent les bras 15 et 16. L'amplitude de ce décalage est déterminée expérimentalement à partir du déplacement du centre instantané de rotation observé lorsque l'on déplace la charge de l'extrémité gauche et l'extrémité droite du plateau. En appelant 2e cette variation du centre instantané de rotation, le décalage à effectuer s'exprime en première approximation par la valeur $2e \times \frac{L}{Z}$, où L désigne la distance entre le centre de l'étranglement 140 et la première articulation rencontrée par les poutrelles, à savoir l'articulation 121 ou 131 dans le cas de la fig. 1. De son côté, Z désigne la valeur moyenne du rayon de rotation des bras 15 et 16. Avec cette disposition selon l'invention, on obtient lorsque la charge est placée en un autre point qu'au centre du plateau une erreur qui est symétrique par rapport à la position centrale.

Dans ce qui précède, on a supposé que les deux bras 15 et 16 portaient respectivement des armatures mobiles 151 et 161 et que ces deux armatures étaient celles d'un condensateur unique.

La fig. 6 illustre schématiquement et partiellement une variante où les bras 15 et 16 liés à la barre de flexion portent chacun deux armatures 351, 352 et 361, 362 respectivement; les deux armatures 351 et 361 de même que les deux armatures 352 et 362 forment deux condensateurs 350 et 360. On voit que les variations respectives de distance des armatures dans ces deux condensateurs sous l'action de la charge pesée sont de valeur opposée.

Bien entendu, la présente invention est susceptible de nombreuses variantes. On notera en particulier que dans les modes de réalisation décrits, les articulations dont le point fixe est lié au plateau inférieur sont disposées intérieurement par rapport aux articulations liées au plateau supérieur. Bien entendu, la disposition inverse est tout à fait possible, étant observé qu'il en résultera une inversion des angles de flexion obtenus en réponse à la charge, ainsi que des autres paramètres reliés. Généralement, l'invention n'est pas limitée par les modes de réalisation préférentiels donnés ci-dessus, et s'étend à toute variante en accord avec la portée des revendications.

**Revendications**

1. Appareil de pesage comprenant un plateau supérieur porte-charge (10), un plateau inférieur d'appui (11), et un mécanisme coopérant avec ces deux plateaux pour délivrer une indication relative à la charge présente sur le plateau porte-charge, ledit mécanisme comportant un organe de flexion et des moyens d'articulation pour transformer la force due à une charge sur le plateau porte-charge en deux moments fléchissants appliqués aux extrémités des organes de flexion, caractérisé par le fait que les moyens d'articulation comprennent au moins deux doubles charnières parallèles (127–129; 137–139), montées espacées l'une de l'autre, chacune entre le plateau porte-charge et le plateau d'appui, par le fait que l'organe de flexion comprend un pont rigide (12, 13) muni d'une zone médiane élastique (14), comportant un étranglement (140), et dont les extrémités (120, 130) sont reliées respectivement aux parties intermédiaires (128, 138) des deux doubles charnières, et par le fait que le mécanisme comporte en outre deux bras (15, 16) liés rigidement par l'une de leurs extrémités au pont de part et d'autre de son étranglement (140), ainsi que deux armatures (151, 161) portées par lesdits bras, et aptes à définir au moins une capacité fonction de la charge appliquée sur le plateau porte-charge.

2. Appareil de pesage selon la revendication 1, caractérisé par le fait que les plateaux porte-charge (10) et d'appui (11), le pont (12, 13) et les deux bras porte-armatures (15, 16) sont généralement parallèles entre eux.

3. Appareil de pesage selon l'une des revendications 1 et 2, caractérisé par le fait que le pont comprend une lame de flexion (14) à étranglement (140) en partie centrale, et deux leviers (12, 13) disposés symétriquement par rapport à celle-ci.

4. Appareil de pesage selon la revendication 3, caractérisé par le fait que les deux leviers (12, 13) ont la forme générale de T opposés par l'extrémité de leur âme, les barres des T étant des pièces rectangulaires (120, 130) coopérant à définir les articulations, tandis que leurs âmes (12, 13) définissent une grande rigidité transversale en même temps qu'une faible rigidité en torsion.

5. Appareil de pesage selon l'une quelconque des revendications 1 à 4, caractérisé par le fait que l'étranglement (140) de la partie médiane élastique est légèrement décalé de la position symétrique.

6. Appareil de pesage selon l'une quelconque des revendications 1 à 5, caractérisé par le fait que les moyens d'articulation comportent quatre double charnières élastiques définies chacune par deux étranglements parallèles, montées dans les quatre zones de coin du plateau supérieur, et pourvues deux à deux d'axes de charnières alignées.

7. Appareil de pesage selon l'une quelconque des revendications 1 à 6, caractérisé par le fait que l'une des armatures (151, 161) du condensateur déborde légèrement l'autre sur toute sa périphérie, les deux armatures formant ensemble un même condensateur.

8. Appareil de pesage selon l'une des revendications 1 à 7, caractérisé par le fait que les deux armatures portées par les bras liés rigidement au pont de part et d'autre de sa partie médiane sont les armatures mobiles (351, 352; 361, 362) de deux condensateurs variables (350; 360), agencés de sorte que les variations respectives de distance des armatures dans ces deux condensateurs sous l'action de la charge pesée soient de valeur opposée.

**Claims**

1. Weighing apparatus comprising an upper load carrying plate (10), a lower support plate (11) and a mechanism co-operating with these two plates for giving an indication relative to the load present on the load carrying plate, the said mechanism having a flexion member and articulation means for transforming the force due to a load on the load carrying plate into two bending moments applied to the ends of flexion members, characterised by the fact that the articulation means comprise at least two parallel double hinges (127–129; 137–139), mounted spaced the one from the other, each between the load carrying plate and the support plate, by the fact that the flexion member comprises a rigid bridge (12, 13) provided with a median elastic zone (14), having a narrowing (140), and of which the ends (120, 130) are connected respectively to the intermediate parts (128, 138) of the two double hinges, and by the fact that the mechanism has in addition two arms (15, 16) rigidly linked by one of their ends to the bridge on either side of its narrowing (140), as well as two armatures (151, 161) carried by the said arms, and adapted to define at least one capacity as a function of the load applied on the load carrying plate.

2. Weighing apparatus according to claim 1, characterised by the fact that the load carrying plate (10) and the support plate (11), the bridge (12, 13) and the two armature carrying arms (15, 16) are generally parallel to each other.

3. Weighing apparatus according to either one of claims 1 and 2, characterised by the fact that the bridge comprises a flexion strip (14) with a central narrowing (140), and two levers (12, 13) arranged symmetrically with respect to the strip.

4. Weighing apparatus according to claim 3, characterised by the fact that the two levers (12, 13) are generally T-shaped and opposite each other at the extremity of their stem, the bars of the T's being rectangular pieces (120, 130) co-operating to define the articulations, whilst their stems (12, 13) have a large transverse rigidity at the same time as a weak rigidity in torsion.

5. Weighing apparatus according to any one of claims 1 to 4, characterised by the fact that the narrowing (140) of the median elastic part is slightly displaced from the symmetric position.

6. Weighing apparatus according to any one of claims 1 to 5, characterised by the fact that the articulation means has four double elastic hinges defined each by two parallel narrowings, mounted in the four corner zones of the upper plate and provided two by two with axes of aligned hinges.

7. Weighing apparatus according to any one of claims 1 to 6, characterised by the fact that one of the armatures (151, 161) of the condenser projects slightly beyond the other around its entire periphery, the two armatures forming together the same condenser.

8. Weighing apparatus according to any one of claims 1 to 7, characterised by the fact that the two armatures carried by the arms rigidly linked to the bridge on either side of its median part are movable armatures (351, 352; 361, 362) of two variable condensers (350; 360) arranged so that the respective variations in separation of the armatures in these two condensers under the action of the load weighed are of opposite value.

**Patentansprüche**

1. Wägevorrichtung mit einer oberen Lasttrageplatte (10), einer unteren Abstützplatte (11) und einem Mechanismus, welcher mit diesen beiden Platten zusammenwirkt, um eine Anzeige bezüglich der auf der Lasttrageplatte befindlichen Last zu geben, wobei dieser Mechanismus ein Flexionsorgan und Gelenkmittel umfasst, welche die Kraft, die von einer Last auf der Lasttrageplatte herrührt, in zwei Biegemomente umwandeln, welche auf die Enden der Flexionsorgane einwirken, dadurch gekennzeichnet, dass die Gelenkmittel wenigstens zwei parallele Doppelscharniere (127–129; 137–139) umfassen, welche mit Abstand voneinander zwischen der Lasttrageplatte und der Abstützplatte montiert sind, dass das Flexionsorgan eine starre Brücke (12, 13) umfasst, die mit einer elastischen Mittelzone (14) versehen ist, welche eine Querschnittsverminderung (140) aufweist, und deren Enden (120, 130) mit den Mittelbereichen (128, 138) der zwei Doppelscharniere verbunden sind, und dass der Mechanismus ausserdem zwei Arme (15, 16) aufweist, die mit einem ihrer Enden beidseits der Querschnittseinschnürung der Brücke mit dieser verbunden sind und zwei Beläge (151, 161) tragen, die geeignet sind, wenigstens eine Kapazität als Funktion der auf die Lasttrageplatte aufgebrachten Last zu definieren.

2. Wägevorrichtung nach Anspruch 1, dadurch gekennzeichnet, dass die Lasttrageplatte (10) und die Abstützplatte (11), die Brücke (12, 13) und die beiden Beläge tragenden Arme (15, 16) im allgemeinen parallel zueinander verlaufen.

3. Wägevorrichtung nach einem der Ansprüche 1 und 2, dadurch gekennzeichnet, dass die Brücke eine Biegeplatte (14) umfasst mit einer Querschnittsverminderung (140) im Mittelteil sowie zwei Hebel (12, 13), die symmetrisch dazu angeordnet sind.

4. Wägevorrichtung nach Anspruch 3, dadurch gekennzeichnet, dass die zwei Hebel (12, 13) die allgemeine Form eines T aufweisen und mit ihren Mittelstegen gegeneinander gerichtet sind, wobei die Querstege der T rechteckige Stücke (120, 130) sind, welche an der Bildung der Gelenke beteiligt sind, wobei ihre Mittelstege (12, 13) eine grosse Quersteifigkeit und gleichzeitig geringe Torsionssteifigkeit aufweisen.

5. Wägevorrichtung nach einem der Ansprüche 1 bis 4, dadurch gekennzeichnet, dass die Querschnittsverminderung (140) der mittleren elastischen Zone leicht aus der symmetrischen Position verschoben ist.

6. Wägevorrichtung nach einem der Ansprüche 1 bis 5, dadurch gekennzeichnet, dass die Gelenkmittel vier elastische Doppelscharniere umfassen, deren jedes durch zwei parallele Querschnittsverminderungen definiert ist und welche in den vier Eckbereichen der oberen Platte montiert sind und paarweise mit parallelen Scharnierachsen versehen sind.

7. Wägevorrichtung nach einem der Ansprüche 1 bis 6, dadurch gekennzeichnet, dass einer der Kondensatorbeläge (151, 161) geringfügig den anderen an seinem ganzen Umfang überragt, wobei die zwei Beläge zusammen einen Kondensator bilden.

8. Wägevorrichtung nach einem der Ansprüche 1 bis 7, dadurch gekennzeichnet, dass die beiden Beläge, welche von den starr zu beiden Seiten des Mittelbereiches der Brücke befestigten Arme getragen werden, bewegliche Beläge (351, 352; 361, 362) von zwei variablen Kondensatoren (350; 360) sind, die derart angeordnet sind, dass die Veränderungen des Abstandes der Beläge in diesen beiden Kondensatoren unter dem Einfluss der gewogenen Last entgegengesetzten Wert aufweisen.

Fig.1

Fig.2

Fig.3

Fig:5

Fig:4

0 018 919

Fig. 6